(19) Europäisches Patentamt
European Patent Office
Office européen des brevets

(11) Veröffentlichungsnummer: **0 010 754**
**B1**

(12) # EUROPÄISCHE PATENTSCHRIFT

(45) Veröffentlichungstag der Patentschrift: **08.09.82**

(51) Int. Cl.³: **C 07 F 9/65**, A 01 N 57/08

(21) Anmeldenummer: **79104218.7**

(22) Anmeldetag: **30.10.79**

(54) **1-Posphorylierte 2-(Phenoxy-alkyl)-2-imidazolinderivate, Verfahren zu ihrer Herstellung, Mittel welche diese Derivate enthalten und ihre Verwendung zur Bekämpfung von Schädlingen.**

(30) Priorität: **02.11.78 CH 11291/78**
**08.06.79 CH 5367/79**

(43) Veröffentlichungstag der Anmeldung:
**14.05.80 Patentblatt 80/10**

(45) Bekanntmachung des Hinweises auf die Patenterteilung:
**08.09.82 Patentblatt 82/36**

(84) Benannte Vertragsstaaten:
**AT BE CH DE FR GB IT NL**

(56) Entgegenhaltungen:
**DE-A-2 756 639**
**DE-A-2 818 367**
**US-A-3 539 561**

(73) Patentinhaber: **CIBA-GEIGY AG, Patentabteilung Postfach, CH-4002 Basel (CH)**

(72) Erfinder: **Böger, Manfred, Lindenstrasse 33, D-7858 Weil am Rhein 5 (DE)**
Erfinder: **Drabek, Jozef, Dr., Benkenstrasse 12, CH-4104 Oberwil (CH)**
Erfinder: **Mattern, Günter, Dr., Sichternstrasse 35, CH-4410 Liestal (CH)**
Erfinder: **Traber, Walter, Dr., Neueneichweg 12, CH-4153 Reinach (CH)**

(74) Vertreter: **Zumstein, Fritz sen., Dr. et al, Bräuhausstrasse 4, D-8000 München 2 (DE)**

**EP 0 010 754 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# 1-Phosphorylierte 2-(Phenoxy-alkyl)-2-imidazolinderivate, Verfahren zu ihrer Herstellung, Mittel welche diese Derivate enthalten und ihre Verwendung zur Bekämpfung von Schädlingen

Die vorliegende Erfindung betrifft neue 1-phosphorylierte 2-(Phenoxy-alkyl)-2-imidazolinderivate, welche eine Wirkung gegen Schädlinge besitzen, und Verfahren zu ihrer Herstellung sowie Schädlingsbekämpfungsmittel welche diese Derivate als aktive Komponente enthalten, und Verfahren zur Bekämpfung von Schädlingen unter Verwendung der neuen Verbindungen.

2-(Phenoxy-alkyl)-2-imidazoline mit pestizider, vor allem ektoparasitizider, Wirkung sind bekannt (siehe z.B. DOS 2818367, japanische Patentveröffentlichung 76/106739 und DOS 2756639). Nach vorliegender Erfindung werden neuartige Verbindungen dieses Typs bereitgestellt, die ebenfalls eine Wirkung gegen Schädlinge, insbesondere gegen Vertreter der Ordnung Akarina aufweisen und welche aufgrund ihrer vorteilhaften biologischen Eigenschaften für die praktische Anwendung besonders geeignet sind.

Die erfindungsgemässen neuen 1-phosphorylierten 2-(Phenoxy-alkyl)-2-imidazolinderivate, entsprechen der Formel I

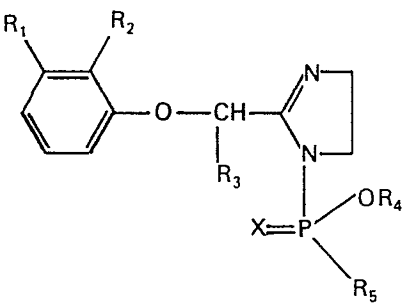

(I)

worin $R_1$ und $R_2$ unabhängig voneinander Chlor oder Methyl, $R_3$ Wasserstoff oder $C_1$-$C_4$-Alkyl, $R_4$ Methyl oder Äthyl, $R_5$ Methoxy, Äthoxy, $C_1$-$C_4$-Alkylthio oder Phenyl und X Sauerstoff oder Schwefel bedeuten.

Unter dem Begriff «$C_1$-$C_4$-Alkyl» sind Methyl, Äthyl, n- und i-Propyl sowie n-, i-, s- und t-Butyl zu verstehen. Solche Alkylgruppen bilden auch den Alkylteil von $C_1$-$C_4$-Alkylthiogruppen als $R_5$.

In den Verbindungen der Formel I sind die folgenden Substituententypen sowie Kombinationen derselben untereinander bevorzugt:

1) Bei $R_3$: Wasserstoff, Methyl und Äthyl insbesondere Äthyl;

2) Bei $R_4$: Äthyl;

3) Bei $R_5$: n-Propylthio, i-Butylthio und s-Butylthio;

4) Bei X: Sauerstoff.

Die Verbindungen der Formel I liegen auch in Form von Säureadditionssalzen z.B. Mineral-Salzen vor und können erfindungsgemäss in Form ihrer Salze verwendet werden. Unter dem Begriff der vorliegenden Erfindung versteht man demzufolge sowohl die freien Verbindungen der Formel I als auch deren Säureadditionssalze.

Es hat sich nun überraschenderweise gezeigt, dass die erfindungsgemässen Verbindungen eine wertvolle Wirkung sowohl gegen pflanzenschädigende Akariden (Milben: z.B. der Familien Tetranychidae, Tarsonemidae, Eriophyidae, Tyroglyphidae und Glycyphagidae) als auch gegen ektoparasitäre Akariden (Milben und Zecken: z.B. der Familien Ixodidae, Argasidae, Sarcoptidae und Dermanyssidae), welche an Nutztieren Schaden anrichten, aufweisen. Dabei wurde weiter festgestellt, dass bei der Applikation auf Pflanzen die erwähnten Substanzen die Eigenschaft besitzen, durch die Blattoberfläche in das Innere der Blätter zu penetrieren. Diesen Eigenschaften zufolge sind die Verbindungen der Formel I sowie deren für Warmblüter nicht-toxische Säureadditionssalze zur Bekämpfung von saugenden Pflanzenschädlingen, insbesondere pflanzenparasitären Akariden, in Kulturen von Nutz- und Zierpflanzen, insbesondere in Obst- und Gemüse-Kulturen und vor allem auf dem Gebiet des Citrusbaues besonders geeignet.

Die Verbindungen der Formel I werden analog bekannten Verfahren hergestellt, indem man z.B. eine Verbindung der Formel II

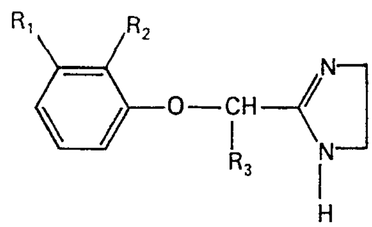

(II)

in Gegenwart einer Base mit einer Verbindung der Formel III

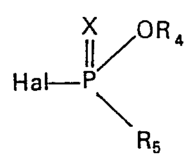

(III)

umsetzt, wobei in den Formeln II und III $R_1$, $R_2$, $R_3$, $R_4$, $R_5$ und X die unter Formel I bereits angegebenen Bedeutungen haben und Hal für ein Halogenatom, insbesondere ein Chlor- oder Bromatom steht.

Das Verfahren wird zweckmässig bei einer Temperatur zwischen −20 °C und 80 °C bei normalem oder leicht erhöhtem Druck und vorzugsweise in Gegenwart eines gegenüber den Reaktionsteilnehmern inerten Lösungs- oder Verdünnungsmittels durchgeführt. Als Lösungs- oder Verdünnungsmittel eignen sich z.B. Äther und ätherartige Verbindungen wie Di-äthyläther, Diisopropyläther, Dioxan und Tetrahydrofuran; aromatische Kohlenwasserstoffe wie Benzol, Toluol und Xylole; und Ketone wie Aceton, Methyläthylketon und Cyclohexanon.

Als für dieses Verfahren geeignete Basen kommen insbesondere tertiäre Amine, wie Trialkylamine, Pyridine und Dialkylaniline ferner Hydroxide, Oxide, Carbonate und Bicarbonate von Alkali- und Erdalkalimetallalkoholate wie z.B. Kaliumtert. butylat und Natriummethylat in Betracht.

Die auf diese Weise hergestellten Verbindungen der Formel I können nach an sich bekannten Methoden in ihre Säureadditionssalze überführt werden.

Die Verbindungen der Formel I worin $R_3$ eine Alkylgruppe bedeutet liegen in Form von optisch aktiven Isomeren vor. Wenn deshalb bei der Herstellung keine optisch aktiven Ausgangsmaterialien verwendet werden, gelangt man zwangsläufig zu racemischen Gemischen. Solche Isomerengemische können z.B. mit Hilfe chromatographischer Trennmethoden in die einzelnen isomeren Formen aufgetrennt werden. Unter dem Begriff der gegenwärtigen Erfindung versteht man sowohl die einzelnen optisch aktiven Isomere, als auch deren Gemische.

Die in dem vorstehend aufgeführten Verfahren verwendeten Ausgangsstoffe sind bekannt (vgl. DOS 2 818 367
und DOS 2 756 638) bzw. können analog den bekannten Methoden hergestellt werden.

Die Verbindungen der Formel I werden erfindungsgemäss als solche verwendet oder bilden einen Bestandteil von Mitteln, welche noch geeignete Trägerstoffe oder Zuschlagstoffe oder Gemische solcher Stoffe enthalten.

Geeignete Träger und Zuschlagstoffe können fest oder flüssig sein und entsprechen den in der Formulierungstechnik üblichen Stoffen wie z.B. natürlichen oder regenerierten Stoffen, Lösungs-, Dispergier-, Netz-, Haft-, Verdickungs-, Binde- und/oder Düngemitteln.

Die akarizide Wirkung der erfindungsgemässen Mittel lässt sich durch Zusatz anderer Akarizide und/oder Insektizide wesentlich verbreitern.

Als Zusätze eignen sich z.B. org. Phosphorverbindungen; Nitrophenole und deren Derivate; Formamidine; Harnstoffe; pyrethrinartige Verbindungen; Karbonate und chlorierte Kohlenwasserstoffe.

Die erfindungsgemässen Mittel können z.B. als Stäubemittel, Granulate, Dispersionen, Lösungen und Aufschlämmungen sowie als in Wasser dispergierbare Spritzpulver, Pasten, Emulsionen und Emulsionskonzentrate vorliegen und angewendet werden.

Der Gehalt an Wirkstoff (Verbindung der Formel I) in den oben beschriebenen Mitteln liegt zwischen 0,1 bis 95%, dabei ist zu erwähnen, dass bei der Applikation aus dem Flugzeug oder mittels anderer geeigneter Applikationsgeräte auch höhere Konzentrationen eingesetzt werden können.

Die Wirkstoffe der Formel I können beispielsweise wie folgt formuliert werden:

Emulsionskonzentrat I
20 Gew.-Teile des obengenannten Wirkstoffes werden in
70 Gew.-Teilen Xylol gelöst und mit
10 Gew.-Teilen eines Emulgiermittels, bestehend aus einem Gemisch eines Arylphenylpolyglykoläthers und dem Calciumsalz der Dodecylbenzolsulfonsäure, versetzt. Das Emulsionskonzentrat kann in beliebigem Verhältnis mit Wasser versetzt werden und bildet dabei eine milchige Emulsion.

Emulsionskonzentrat II
5 bis max. 30 Gew.-Teile Wirkstoff werden unter Rühren bei Zimmertemperatur in
30 Gew.-Teilen Dibutylphthalat
10 Gew.-Teilen Solvent 200® (niederviskoses hocharomat. Erdöldestillat)
15 bis 35 Gew.-Teilen Dutrex 238 FC® (viskoses hocharomat. Erdöldestillat) gelöst und mit
10 Gew.-Teilen eines Emulgatorgemisches, bestehend aus Ricinusöl-polyglykoläther und dem Calciumsalz der Dodecylbenzolsulfonsäure, versetzt. Das so erhaltene Emulsionskonzentrat gibt in Wasser milchige Emulsionen.

Spritzpulver
5 bis 30 Gew.-Teile des Wirkstoffes werden in einer Mischapparatur mit
5 Gew.-Teilen eines aufsaugenden Trägermaterials (Kieselsäure K 320® oder Wessalon S® und
55 bis 80 Gew.-Teilen eines Trägermaterials (Bolus alba oder Kaolin B 24®) und einem Dispergiermittelgemisch, bestehend aus
5 Gew.-Teilen eines Na-lauryl-sulfonates und
5 Gew.-Teilen eines Alkyl-aryl-polyglykoläthers, intensiv vermischt. Diese Mischung wird auf einer Stift- oder Luftstrahlmühle bis auf 5–15 µm gemahlen. Das so erhaltene Spritzpulver gibt in Wasser eine gute Suspension.

Pour-on-Lösung

| | |
|---|---|
| Wirkstoff | 30,0 g |
| Natrium-dioctylsulfosuccinat | 3,0 g |
| Benzylalkohol | 48,0 g |
| Erdnussöl | 19,8 g |
| | 100,8 g = 100 ml |

Der Wirkstoff wird in dem Benzylalkohol unter Rühren, eventuell auch unter leichtem Erwärmen, gelöst. Zu der Lösung wird das Natriumdioctylsulfosuccinat und das Erdnussöl gegeben und unter Erwärmen und gründlichem Durchmischen gelöst.

Die nachfolgenden Beispiele dienen zur näheren Erläuterung der Erfindung.

Beispiel 1:
Herstellung von 1-(Diäthoxyphosphinyl)-2-[1-(2,3-di-methylphenoxy)-propyl]-2-imidazolin.
Zu einer Lösung von 11,6 g 2-[1-(2,3-Dimethylphenoxy)-propyl]-2-imidazolin in 100 ml Toluol wurden bei 0°C 6 g Triäthylamin zugegeben und anschliessend bei 0° bis 10°C 8,6 g Diäthylchlorphosphat unter ständigem Rühren langsam zugetropft. Die erhaltene Suspension wurde 2 Stunden bei Raumtemperatur nachgerührt, mit etwas Wasser versetzt und die Toluolphase noch mit wenig Wasser gewaschen. Nach dem Abdampfen der vorher getrockneten Toluollösung und Trocknen am Hochvacuum erhielt man das 1-(Diäthoxyphosphinyl)-2-[1-(2,3-di-methylphenoxy)-propyl]-2-imidazolin der Formel

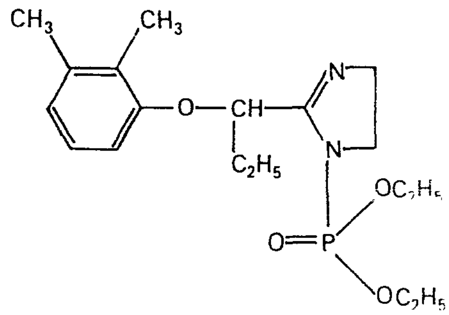

(Verbindung Nr. 1)

als gelbliches klares Öl mit einer Refraktion von $n_D^{20}$ 1,5092.

Die folgenden Verbindungen der Formel I

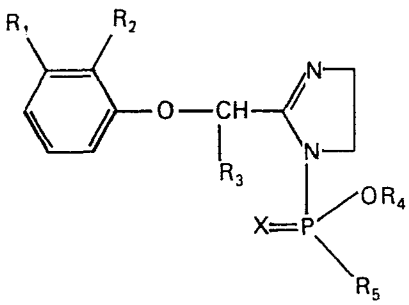

(I)

können auf analoge Weise erhalten werden:

| Verb. Nr. | $R_1$ | $R_2$ | $R_3$ | $R_4$ | $R_5$ | X | Physikalische Daten |
|---|---|---|---|---|---|---|---|
| 2 | $CH_3$ | $CH_3$ | H | $CH_3$ | $CH_3O$ | O | Fp. 147–149°C |
| 3 | $CH_3$ | $CH_3$ | H | $C_2H_5$ | $C_2H_5O$ | O | $n_D^{20}$:1,5126 |
| 4 | $CH_3$ | $CH_3$ | H | $C_2H_5$ | $C_2H_5S$ | O | $n_D^{20}$:1,5527 |
| 5 | $CH_3$ | $CH_3$ | H | $C_2H_5$ | 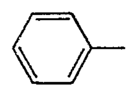 | S | $n_D^{20}$:1,5960 |
| 6 | $CH_3$ | $CH_3$ | H | $C_2H_5$ | (n)$C_3H_7S$ | O | $n_D^{20}$:1,5431 |
| 7 | $CH_3$ | $CH_3$ | H | $C_2H_5$ | (n)$C_3H_7S$ | S | $n_D^{20}$:1,5152 |
| 8 | $CH_3$ | $CH_3$ | H | $C_2H_5$ | (s)$C_4H_9S$ | O | $n_D^{20}$:1,5421 |
| 9 | $CH_3$ | $CH_3$ | H | $C_2H_5$ | (i)$C_4H_9S$ | O | |
| 10 | $CH_3$ | $CH_3$ | $CH_3$ | $C_2H_5$ | (n)$C_3H_7S$ | O | |
| 11 | $CH_3$ | $CH_3$ | $C_2H_5$ | $CH_3$ | $CH_3O$ | O | $n_D^{20}$:1,5231 |
| 12 | $CH_3$ | $CH_3$ | $C_2H_5$ | $C_2H_5$ | $C_2H_5S$ | O | $n_D^{20}$:1,5399 |
| 13 | $CH_3$ | $CH_3$ | $C_2H_5$ | $C_2H_5$ | 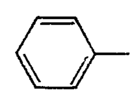 | S | $n_D^{20}$:1,5821 |
| 14 | $CH_3$ | $CH_3$ | $C_2H_5$ | $C_2H_5$ | (N)$C_3H_7S$ | O | $n_D^{20}$:1,5341 |
| 15 | $CH_3$ | $CH_3$ | $C_2H_5$ | $C_2H_5$ | (n)$C_3H_7S$ | S | $n_D^{20}$:1,5609 |
| 16 | $CH_3$ | $CH_3$ | $C_2H_5$ | $C_2H_5$ | (s)$C_4H_9S$ | O | $n_D^{20}$:1,5314 |
| 17 | $CH_3$ | $CH_3$ | $C_2H_5$ | $C_2H_5$ | (i)$C_4H_9S$ | O | $n_D^{20}$:1,5306 |
| 18 | Cl | Cl | $C_2H_5$ | $CH_3$ | $CH_3O$ | O | |
| 19 | Cl | Cl | $C_2H_5$ | $C_2H_5$ | $C_2H_5O$ | O | |
| 20 | Cl | Cl | $C_2H_5$ | $C_2H_5$ | $C_2H_5S$ | O | |
| 21 | Cl | Cl | $C_2H_5$ | $C_2H_5$ | 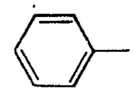 | S | |

| Verb. Nr. | $R_1$ | $R_2$ | $R_3$ | $R_4$ | $R_5$ | X | Physikalische Daten |
|---|---|---|---|---|---|---|---|
| 22 | Cl | Cl | $C_2H_5$ | $C_2H_5$ | $(n)C_3H_7S$ | O | |
| 23 | Cl | Cl | $C_2H_5$ | $C_2H_5$ | $(n)C_3H_7S$ | S | |
| 24 | Cl | Cl | $C_2H_5$ | $C_2H_5$ | $(s)C_4H_9S$ | O | |
| 25 | Cl | Cl | $C_2H_5$ | $C_2H_5$ | $(i)C_4H_9S$ | O | |
| 26 | Cl | $CH_3$ | $(n)C_4H_9$ | $C_2H_5$ | $(s)C_4H_9S$ | O | $n_D^{20}$:1,5235 |
| 27 | Cl | $CH_3$ | $(n)C_3H_7$ | $C_2H_5$ | $(s)C_4H_9S$ | O | $n_D^{20}$:1,5258 |
| 28 | Cl | $CH_3$ | $CH_3$ | $C_2H_5$ | $(s)C_4H_9S$ | O | $n_D^{20}$:1,5380 |

Beispiel 2:
Wirkung gegen pflanzenschädigende Akariden (Milben): Tetranychus urticae (OP-sensible) und Tetranychus cinnabarinus (OP-tolerant)
Die Primärblätter von Phaseolus vulgaris Pflanzen wurden 16 Stunden vor dem Versuch auf akarizide Wirkung mit einem infestierten Blattstück aus einer Massenzucht von Tetranychus urticae (OP-sen.) oder Tetranychus cinnabarinus (OPtol.) belegt. (Die Toleranz bezieht sich auf die Verträglichkeit von Diazinon.)

Die so behandelten infestierten Pflanzen wurden mit einer Versuchslösung enthaltend 400 oder 200 ppm der zu prüfenden Verbindung zur Tropfnässe besprüht.

Nach 24 Stunden und wiederum nach 7 Tagen wurden Imagines und Larven (alle beweglichen Stadien) unter dem Binokular auf lebende und tote Individuen ausgewertet.

Man verwendete pro Konzentration und pro Testspezies eine Pflanze. Während des Versuchsverlaufs standen die Pflanzen in Gewächshauskabinen bei 25°C.

Die Verbindungen gemäss Beispiel 1, 8, 12–17, 23 und 28 zeigten in diesem Versuch eine positive Wirkung gegen Individuen der Spezies Tetranychus urticae und Tetranychus cinnabarius.

Beispiel 3:
Wirkung gegen ektoparasitäre Akariden (Zecken: Rhipicephalus bursa (Imagines und Larven), Amblyomma hebraeum (♀ Imagines, Nymphen und Larven) und Boophilus microplus (Larven OP-sensible und OP-tolerant).
Als Testojekte wurden Larven (jeweils ca. 50), Nymphen (jeweils ca. 25) oder Imagines (jeweils ca. 10) der Zeckenarten Rhipicephalus bursa, Amblyomma hebraeum und Boophilus microplus verwendet. Die Testtiere wurden für kurze Zeit in eine wässrige Emulsion bzw. Lösung enthaltend 0,1; 1,0; 10; 50 oder 100 ppm der zu prüfenden Verbindung getaucht.

Die in Teströhrchen befindlichen Emulsionen bzw. Lösungen wurden dann mit Watte aufgenommen und die benetzten Testtiere in den so kontaminierten Röhrchen belassen. Eine Auswertung der erzielten Abtötungsrate bei jeder Konzentration erfolgte für Larven nach 3 Tagen und für Nymphen und Imagines nach 14 Tagen.

Die Verbindungen gemäss Beispiel 4–8, 12–14, 17 und 28 zeigten in diesem Versuch eine gute Wirkung gegen Larven, Nymphen und Imagines oder Spezies Rhipicephalus bursa und Amblyomma hebraeum sowie gegen Larven (OP-res. und OP-sens.) der Spezies Boophilus microplus.

**Patentansprüche für die Vertragsstaaten: BE, CH, DE, FR, GB, IT, NL**

1. 1-Phosphorylierte-2(phenoxy-alkyl)-2-imidazolinderivate

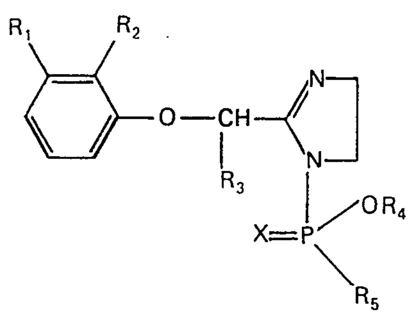

(I)

worin $R_1$ und $R_2$ unabhängig voneinander Chlor oder Methyl, $R_3$ Wasserstoff oder $C_1$-$C_4$-Alkyl, $R_4$ Methyl oder Äthyl, $R_5$ Methoxy, Äthoxy, $C_1$-$C_4$-Alkylthio oder Phenyl und X Sauerstoff oder Schwefel bedeuten.

2. Verbindung nach Anspruch 1 der Formel I, worin $R_4$ Äthyl und $R_5$ n-Propylthio, i-Butylthio oder s-Butylthio bedeuten.

3. Verbindung nach Anspruch 1 oder 2 der Formel I, worin $R_3$ Wasserstoff, Methyl oder Äthyl bedeutet.

4. Verbindung nach Anspruch 3 der Formel I, worin $R_3$ Äthyl bedeutet.

5. Verbindung nach einem der Ansprüche 1 bis 4 der Formel I, worin X Sauerstoff bedeutet.

6. Verbindung nach Anspruch 1 der Formel

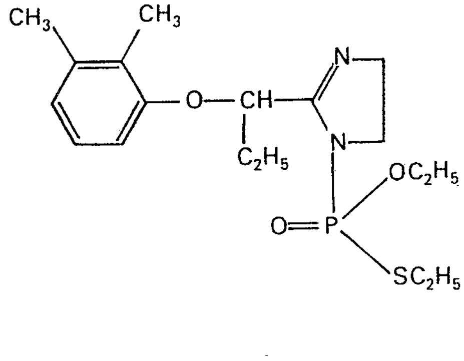

7. Verbindung nach Anspruch 1 der Formel

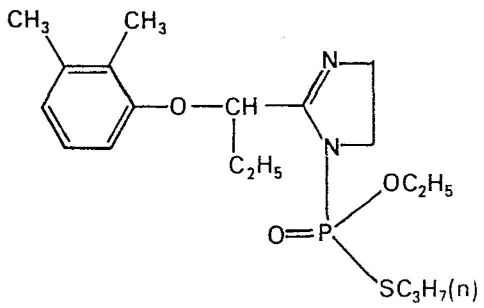

8. Verbindung nach Anspruch 1 der Formel

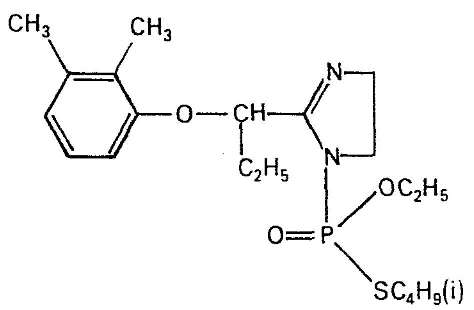

9. Verbindung nach Anspruch 1 der Formel

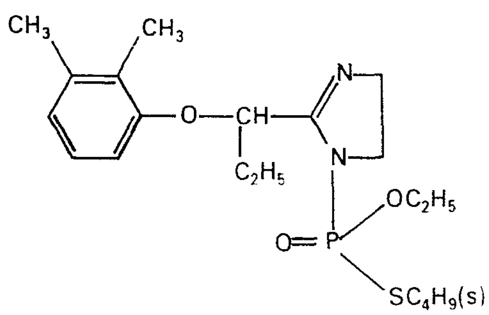

10. Verfahren zur Herstellung von in einem der Ansprüche 1 bis 9 definierten Verbindungen, dadurch gekennzeichnet, dass man eine Verbindung der Formel II

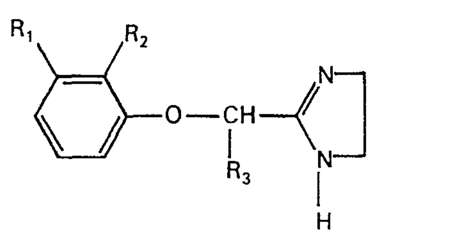

(II)

in Gegenwart einer Base mit einer Verbindung der Formel III

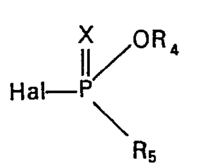

(III)

umsetzt, worin $R_1$, $R_2$, $R_3$, $R_4$, $R_5$ und X die entsprechenden, in einem der Ansprüche 1 bis 9 angegebenen Bedeutungen haben und Hal ein Halogenatom bedeutet.

11. Schädlingsbekämpfungsmittel enthaltend als aktive Komponente eine der in einem der Ansprüche 1 bis 9 definierten Verbindungen.

12. Verwendung von einer der in einem der Ansprüche 1 bis 9 definierten Verbindungen zur Bekämpfung von Schädlingen.

13. Verwendung nach Patentanspruch 12 zur Bekämpfung von Schädlingen der Ordnung Akarina.

**Patentansprüche für den Vertragsstaat: AT**

1. Schädlingsbekämpfungsmittel enthaltend als aktive Komponente eine Verbindung der Formel I

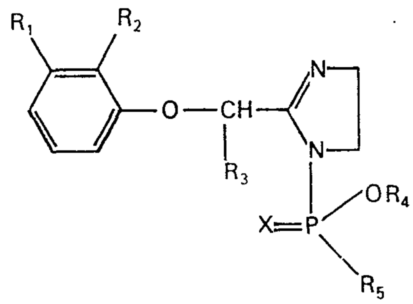

(I)

worin $R_1$ und $R_2$ unabhängig voneinander Chlor oder Methyl, $R_3$ Wasserstoff oder $C_1$-$C_4$-Alkyl, $R_4$ Methyl oder Äthyl, $R_5$ Methoxy, Äthoxy, $C_1$-$C_4$-Alkylthio oder Phenyl und X Sauerstoff oder Schwefel bedeuten.

2. Schädlingsbekämpfungsmittel nach Anspruch 1 enthaltend als aktive Komponente eine Verbindung der Formel I, worin $R_4$ Äthyl und $R_5$ n-Propylthio, i-Butylthio oder s-Butylthio bedeuten.

3. Schädlingsbekämpfungsmittel nach Anspruch 1 oder 2 enthaltend als aktive Komponente eine Verbindung der Formel I, worin $R_3$ Wasserstoff, Methyl oder Äthyl bedeutet.

4. Schädlingsbekämpfungsmittel nach Anspruch 3 enthaltend als aktive Komponente eine Verbindung der Formel I, worin $R_3$ Äthyl bedeutet.

5. Schädlingsbekämpfungsmittel nach einem der Ansprüche 1 bis 4 enthaltend als aktive Komponente eine Verbindung der Formel I, worin X Sauerstoff bedeutet.

6. Schädlingsbekämpfungsmittel nach Anspruch 1 enthaltend als aktive Komponente eine Verbindung der Formel

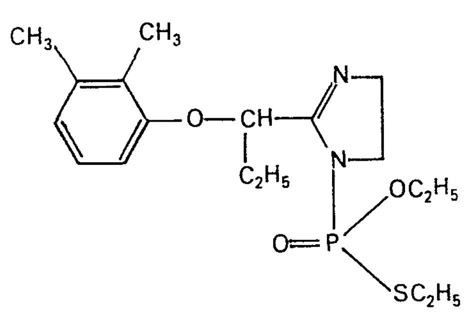

7. Schädlingsbekämpfungsmittel nach Anspruch 1 enthaltend als aktive Komponente eine Verbindung der Formel

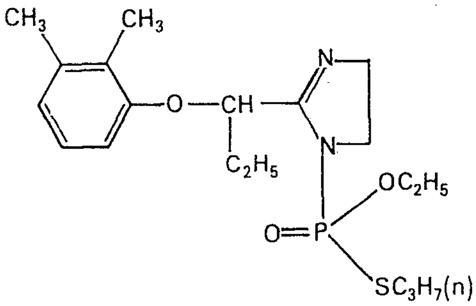

8. Schädlingsbekämpfungsmittel nach Anspruch 1 enthaltend als aktive Komponente eine Verbindung der Formel

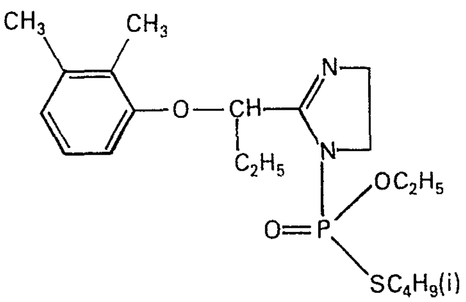

9. Schädlingsbekämpfungsmittel nach Anspruch 1 enthaltend als aktive Komponente eine Verbindung der Formel

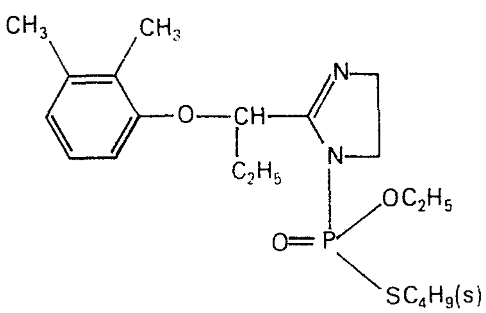

10. Verfahren zur Herstellung von in einem der Ansprüche 1 bis 9 definierten Verbindungen, dadurch gekennzeichnet, dass man eine Verbindung der Formel II

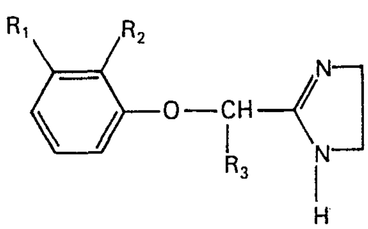

(II)

in Gegenwart einer Base mit einer Verbindung der Formel III

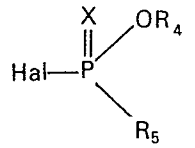

(III)

umsetzt, worin $R_1$, $R_2$, $R_3$, $R_4$, $R_5$ und X die entsprechenden, in einem der Ansprüche 1 bis 9 angegebenen Bedeutungen haben und Hal ein Halogenatom bedeutet.

11. Verwendung von einer der in einem der Ansprüche 1 bis 9 definierten Verbindungen zur Bekämpfung von Schädlingen.

12. Verwendung nach Patentanspruch 11 zur Bekämpfung von Schädlingen der Ordnung Akarina.

**Claims for the Contracting States: BE, CH, DE, FR, GB, IT, NL**

1. A 1-phosphorylated 2(phenoxyalkyl)-2-imidazoline derivative of the formula I

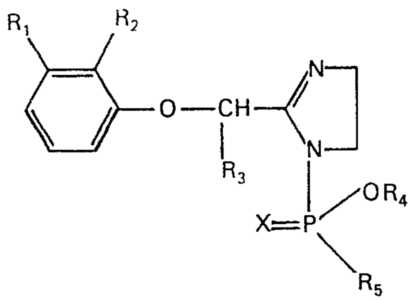

(I)

wherein $R_1$ and $R_2$, each independently of the other, are methyl or chlorine, $R_3$ is hydrogen or $C_1$-$C_4$-alkyl, $R_4$ is methyl or ethyl, $R_5$ is methoxy, ethoxy, $C_1$-$C_4$-alkylthio or phenyl and X is oxygen or sulfur.

2. A compound as claimed in claim 1 of the formula I, wherein $R_4$ is ethyl and $R_5$ is n-propylthio, i-butylthio or s-butylthio.

3. A compound as claimed in claim 1 or 2 of the formula I, wherein $R_3$ is hydrogen, methyl or ethyl.

4. A compound as claimed in claim 3 of the formula I, wherein $R_3$ is ethyl.

5. A compound as claimed in any one of claims 1 to 4 of the formula I, wherein X is oxygen.

6. A compound as claimed in claim 1 of the formula

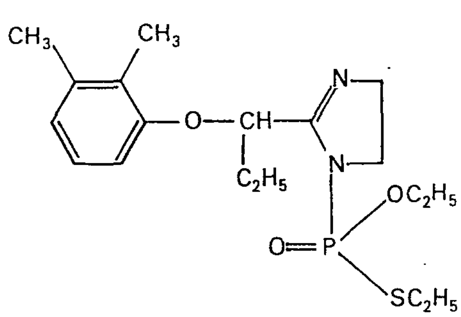

7. A compound as claimed in claim 1 of the formula

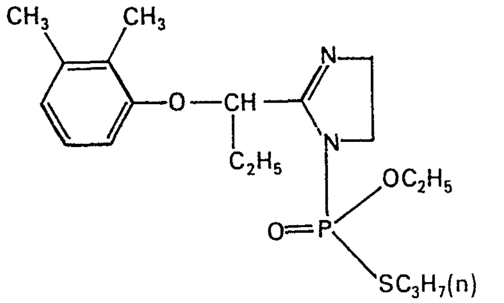

8. A compound as claimed in claim 1 of the formula

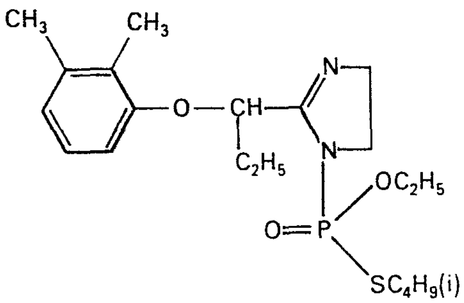

9. A compound as claimed in claim 1 of the formula

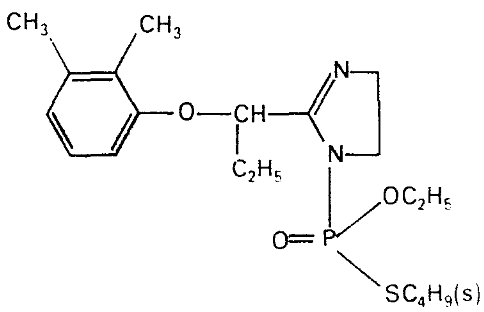

10. A process for the production of a compound as defined in any one of claims 1 to 9, which process comprises reacting a compound of the formula II

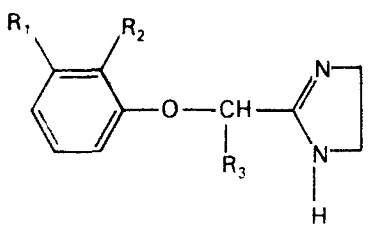

(II)

with a compound of the formula III

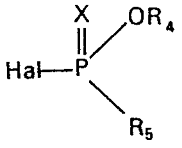

(III)

wherein $R_1$, $R_2$, $R_3$, $R_4$, $R_5$ and X have the meanings given in any one of claims 1 to 9 and "Hal" represents a halogen atom, said reaction being conducted in the presence of a base.

11. A pesticidal composition containing, as active component, a compound as claimed in any one of claims 1 to 9.

12. A method of controlling pests at a locus, which method comprises applying to said locus a compound as claimed in any one of claims 1 to 9.

13. A method as claimed in claim 12, wherein the pests are pests of the order Acarina.

**Claims for the Contracting State: AT**

1. A pesticidal composition which contains, as active component, a compound of the formula I

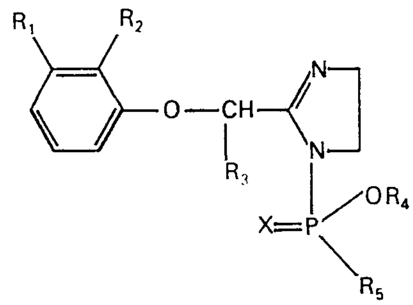

(I)

wherein $R_1$ and $R_2$, each independently of the other, are methyl or chlorine, $R_3$ is hydrogen or $C_1$-$C_4$-alkyl, $R_4$ is methyl or ethyl, $R_5$ is methoxy, ethoxy, $C_1$-$C_4$-alkylthio or phenyl and X is oxygen or sulfur.

2. A pesticidal composition as claimed in claim 1 which contains, as active component, a compound of the formula I, wherein $R_4$ is ethyl and $R_5$ is n-propylthio, i-butylthio or s-butylthio.

3. A pesticidal composition as claimed in claim 1 or 2 which contains, as active component, a compound of the formula I, wherein $R_3$ is hydrogen, methyl or ethyl.

4. A pesticidal composition as claimed in claim 3 which contains, as active component, a compound of the formula I, wherein $R_3$ is ethyl.

5. A pesticidal composition as claimed in any one of claims 1 to 4 which contains, as active component, a compound of the formula I, wherein X is oxygen.

6. A pesticidal composition as claimed in claim 1 which contains, as active component, a compound of the formula

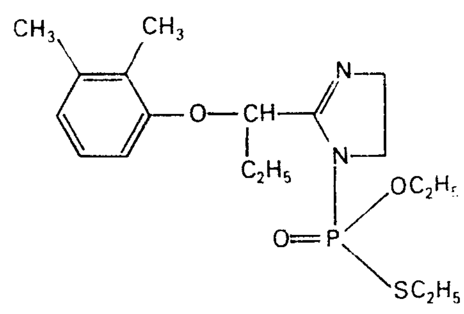

7. A pesticidal composition as claimed in claim 1 which contains, as active component, a compound of the formula

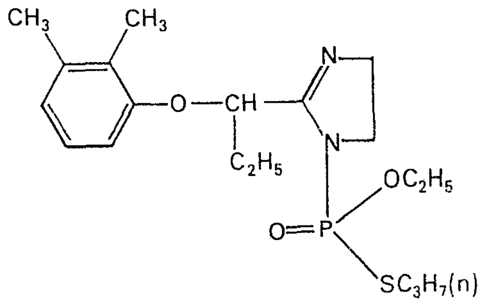

8. A pesticidal composition as claimed in claim 1 which contains, as active component, a compound of the formula

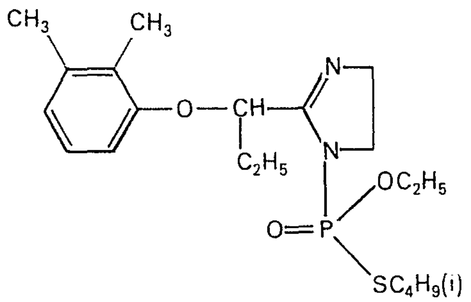

9. A pesticidal composition as claimed in claim 1 which contains, as active component, a compound of the formula

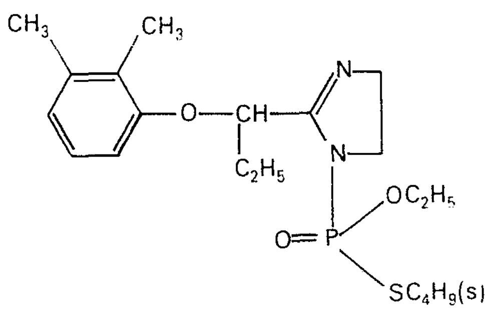

10. A process for the production of a compound as defined in any one of claims 1 to 9, which process comprises reacting a compound of the formula II

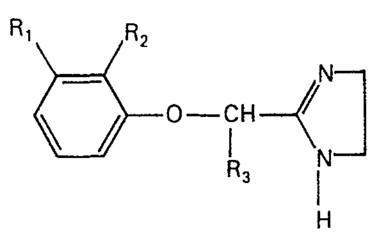

(II)

with a compound of the formula III

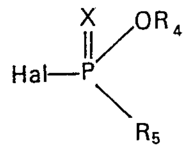

(III)

wherein $R_1$, $R_2$, $R_3$, $R_4$, $R_5$ and X have the meanings given in any one of claims 1 to 9 and "Hal" represents a halogen atom, said reaction being conducted in the presence of a base.

11. A method of controlling pests at a locus, which method comprises applying to said locus a pesticidally effective amount of a compound as claimed in any one of claims 1 to 9.

12. A method as claimed in claim 11, wherein the pests are pests of the order Acarina.

**Revendications pour les Etats contractants: BE, CH, DE, FR, GB, IT, NL**

1. Dérivés 1-phosphorylés de 2-(phénoxyalcoyl)-2-imidazoline de formule I:

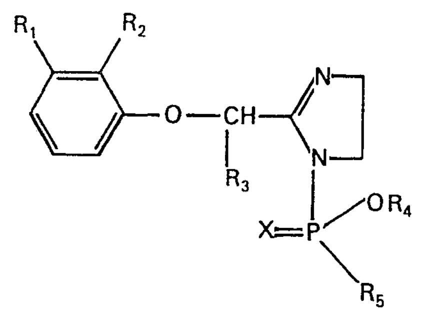

(I)

où $R_1$ et $R_2$ représentent indépendamment l'un de l'autre un chlore ou un méthyle, $R_3$ un hydrogène ou un alcoyle en $C_1$ à $C_4$, $R_4$ un méthyle ou un éthyle, $R_5$ un méthoxy, un éthoxy, un alcoylthio en $C_1$ à $C_4$ ou un phényle et X un oxygène ou un soufre.

2. Composé selon la revendication 1 de formule I, où $R_4$ représente un éthyle et $R_5$ un n-propylthio, un i-butylthio ou un s-butylthio.

3. Composé selon la revendication 1 ou la revendication 2 de formule I, où $R_3$ représente un hydrogène, un méthyle ou un éthyle.

4. Composé selon la revendication 3 de formule I, où $R_3$ représente un éthyle.

5. Composé selon l'une des revendications 1 à 4, de formule I, où X représente un oxygène.

6. Composé selon la revendication 1 de formule:

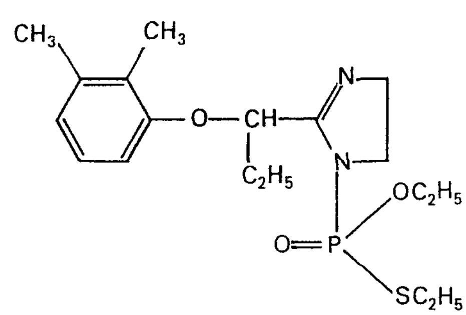

7. Composé selon la revendication 1 de formule:

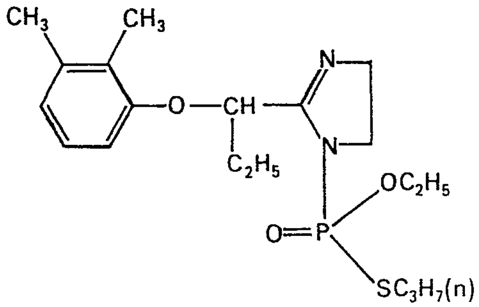

8. Composé selon la revendication 1 de formule:

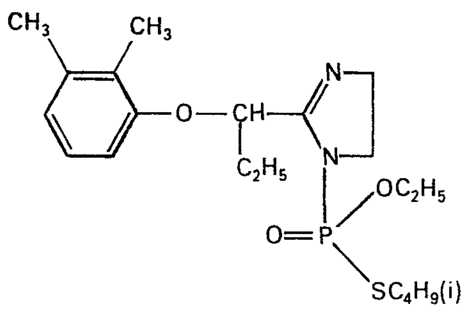

9. Composé selon la revenaication 1 de formule:

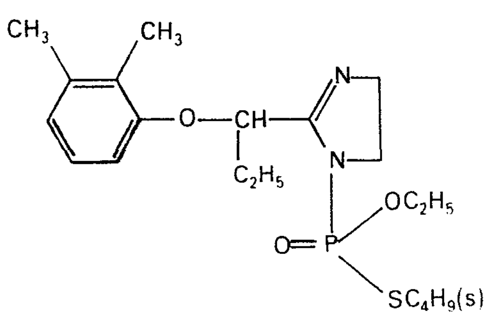

10. Procédé de préparation des composés définis dans l'une des revendications 1 à 9, caractérisé en ce qu'on fait réagir un composé de formule II:

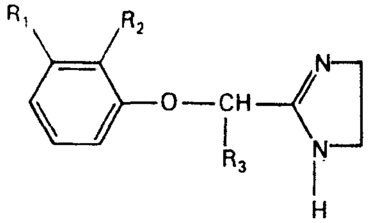

(II)

en présence d'une base avec un composé de formule III:

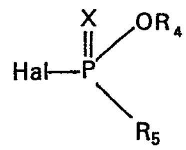

(III)

où $R_1$, $R_2$, $R_3$, $R_4$, $R_5$ et X ont les significations correspondantes, données dans l'une des revendications 1 à 9, et où Hal représente un atome d'halogène.

11. Agent de lutte antiparasitaire contenant comme composant actif l'un des composés défini dans l'une des revendications 1 à 9.

12. Application de l'un des composés défini dans l'une des revendications 1 à 9 à la lutte antiparasitaire.

13. Application selon la revendication 12 à la lutte contre les parasites de l'ordre des acariens.

**Revendications pour l'Etat contractant: AT**

1. Agent de lutte antiparasitaire contenant comme composant actif un composé de formule I:

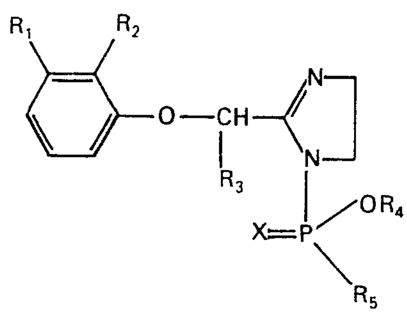

(I)

où $R_1$ et $R_2$ représentent indépendamment l'un de l'autre un chlore ou un méthyle, $R_3$ représente un hydrogène ou un alcoyle en $C_1$ à $C_4$, $R_4$ représente un méthyle ou un éthyle, $R_5$ représente un méthoxy, un éthoxy, un alcoylthio en $C_1$ à $C_4$ ou un phényle et X représente un oxygène ou un soufre.

2. Agent de lutte antiparasitaire selon la revendication 1 contenant comme composant actif un composé de formule I où $R_4$ représente un éthyle et $R_5$ un n-propylthio, un i-butylthio ou un s-butylthio.

3. Agent de lutte antiparasitaire selon la revendication 1 ou la revendication 2 contenant comme composant actif un composé de formule I où $R_3$ représente un hydrogène, un méthyle ou un éthyle.

4. Agent de lutte antiparasitaire selon la revendication 3 contenant comme composant actif un composé de formule I où $R_3$ représente un éthyle.

5. Agent de lutte antiparasitaire selon l'une des revendications 1 à 4 contenant comme composant actif un composé de formule I où X représente un oxygène.

6. Agent de lutte antiparasitaire selon la revendication 1 contenant comme composant actif un composé de formule:

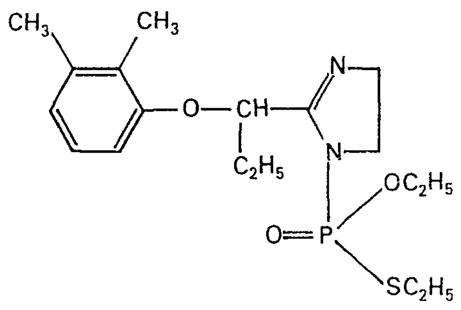

7. Agent de lutte antiparasitaire selon la revendication 1 contenant comme composant actif un composé de formule:

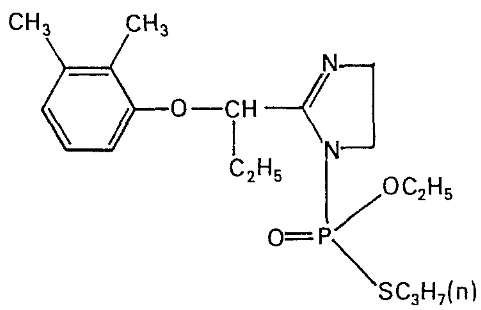

8. Agent de lutte antiparasitaire selon la revendication 1 contenant comme composant actif un composé de formule:

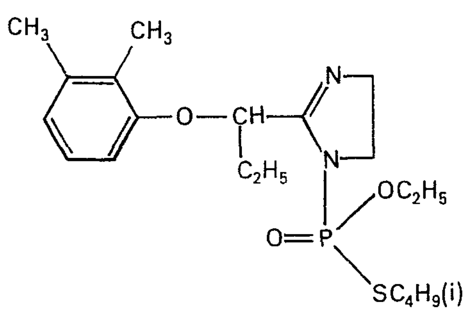

9. Agent de lutte antiparasitaire selon la revendication 1 contenant comme composant actif un composé de formule:

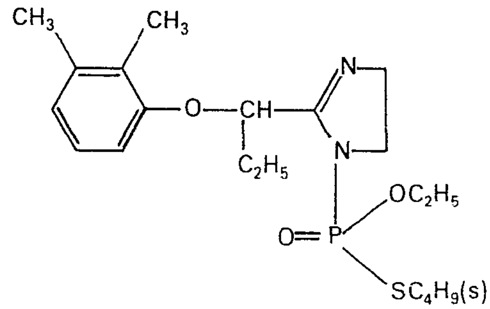

10. Procédé de preparation de composés définis dans l'une des revendications 1 à 9, caractérisé en ce qu'on fait réagir un composé de formule II:

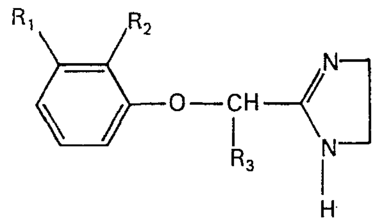

(II)

en présence d'une base avec un composé de formule III:

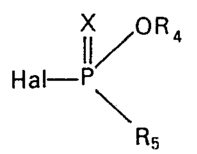

(III)

où $R_1$, $R_2$, $R_3$, $R_4$, $R_5$ et X ont les significations correspondantes, données dans l'une des revendications 1 à 9, et où Hal représente un atome d'halogène.

11. Application de l'un des composés définis dans l'une des revendications 1 à 9 à la lutte antiparasitaire.

12. Application selon la revendication 11 à la lutte contre les parasites de l'ordre des acariens.